# EUROPÄISCHE PATENTSCHRIFT

(11) **EP 0 609 295 B1**
(45) Veröffentlichungstag und Bekanntmachung des Hinweises auf die Patenterteilung: **10.01.1996**
(21) Anmeldenummer: 92921519.2
(22) Anmeldetag: 19.10.1992
(51) Int. Cl.: G11B 15/05

(54) **SPEICHEREINRICHTUNG FÜR EINE MAGNETBANDKASSETTE**
STORAGE ARRANGEMENT FOR MAGNETIC TAPE CASSETTES
MEMOIRE POUR CASSETTES A BANDES MAGNETIQUES

(30) Priorität: 26.10.1991 DE 4135419
(43) Veröffentlichungstag der Anmeldung: 10.08.1994
(73) Patentinhaber: DEUTSCHE THOMSON-BRANDT GMBH, D-78048 Villingen-Schwenningen (DE)
(72) Erfinder: PLATTE, Hans-Joachim, D-3005 Hemmingen 4 (DE); SCHRÖDER, Ernst, F., D-3000 Hannover 51 (DE)
(86) Internationale Anmeldenummer: EP9202399
(87) Internationale Veröffentlichungsnummer: WO9308568

(56) Entgegenhaltungen:
- WO-A-89/10615
- DE-C- 2 943 409
- US-A- 4 930 158
- Patent Abstracts of Japan, Band 13, Nr 430, P937, Zusammenfassung von JP 01-162286, publ 26 Juni 1989
- Patent Abstracts of Japan, Band 12, Nr 396, P774, Zusammenfassung von JP 63-136379, publ 8 Juni 1988

## Beschreibung

Die Erfindung betrifft eine elektronische Speichereinrichtung für eine Magnetbandkassette und ein dafür geeignetes Aufnahme- und/oder Wiedergabegerät, insbesondere einen Videorecorder mit digitaler Verarbeitung von digital codierten Video-/Audiosignalen. Die Magnetbandkassette weist ein Gehäuse auf und in dem Gehäuse enthält sie eine oder mehrerer Magnetbandspulen sowie die elektronische Speichereinrichtung, die über Verbindungsmittel mit dem Aufnahme- und/oder Wiedergabegerät verbindbar ist, von diesem im Sinne einer Auswertung der gespeicherten Information ansteuerbar ist, und die Informationen zur Verhinderung und/oder Ermöglichung bestimmter Betriebszustände des Aufnahme- und/oder Wiedergabegeräts enthält.

Aus der DE-A-2943409 ist eine Magnetbandkassette bekannt, die eine elektronische Speichereinrichtung, elektrische Verbindungsmittel, sowie eine Ansteuermöglichkeit durch ein Aufnahme- und Wiedergabegerät im Sinne einer Auswertung der gespeicherten Information aufweist. Hierbei ist es vorgesehen, den jeweils aktuellen Bandstand zu speichern und ggf. zusätzlich charakteristische Daten zu speichern, welche die Magnetbandkassette selbst und/oder das Magnetband der Kassette selbst betreffen, so z.B. den Kassettentyp oder die vorteilhafte Höhe der Vormagnetisierung. Bei den ersten Daten handelt es sich um veränderliche Daten im Sinne eines Bandzählwerks, die lediglich zur Bestimmung der momentanen Position des Bandes dienen. Bei den zusätzlichen Daten handelt es sich um feste Daten, die ein für allemal eingeschrieben werden und Band- oder Kassettenparameter wie z.B. die unveränderliche mechanische oder magnetische Eigenschaften der Kassette wiederspiegeln. Es ist nicht vorgesehen, diese Daten zu verändern oder durch sie die Aufnahme- und/oder Wiedergabefunktionen direkt zu beeinflussen oder zu sperren.

WO-A-89/10615 zeigt eine Magnetbandkassette mit einer elektronischen Speichereinrichtung, die ein Inhaltsverzeichnis über die aufgezeichneten Informationen enthält und einen schnelleren Zugriff auf gewünschte Informationen ermöglicht.

Die der Erfindung zugrunde liegende Aufgabe besteht darin, in Zusammenhang mit einem bestimmten Aufzeichnungsträger bzw. einer bestimmten Magnetbandkassette unerwünschte oder unerlaubte Betriebszustände des Aufnahme- und/oder Wiedergabegeräts sicher zu sperren und nur erwünschte oder erlaubte Betriebszustände zu ermöglichen, wenn diese Magnetbandkassette in das Aufnahme- und/oder Wiedergabegerät eingebracht wird.
Ein unerwünschter Betriebszustand kann z.B. die Aufnahmefunktion sein, wenn die Kassette bereits Aufnahmen enthält und diese nicht überschrieben bzw. gelöscht werden sollen. Ferner soll der Anwender nachträglich einmal den Typ der Kassette festlegen können.

Unerlaubte Betriebszustände können im Zusammenhang mit der Wiedergabefunktion auftreten. Beispielsweise kann ein privater Nutzer daran interessiert sein, daß von ihm selbst aufgenommene Informationen auf einer Magnetbandkassette nicht von jedermann, sondern nur von Berechtigten z.B. nach Eingabe eines Paßwortes oder einer Paßkennzahl, wiedergegeben werden können. So läßt sich z.B. eine Kindersicherung realisieren. Weitere unerlaubte Betriebszustände entstehen im Bereich der kommerziellen Nutzung, z.B. bei Verkauf oder Verleih von vorbespielten Video-Magnetbandkassetten (Videothek). Der Verkäufer oder Verleiher solcher Kassetten kann daran interessiert sein, daß z.B. gestohlene Kassetten überhaupt nicht wiedergebbar sind, daß Kassetten, für die ein bestimmter Mietpreis entrichtet worden ist, nur eine entsprechende Anzahl von Wiedergabevorgängen gestatten, oder daß nur bestimmte Teile der aufgezeichneten Information wiedergebbar sind.

Die Aufgabe wird erfindungsgemäß mit einer Speichereinrichtung mit den Merkmalen nach Anspruch 1 gelöst. Vorteilhafte Weiterbildungen und Ausgestaltungen sind in den Unteransprüchen 2-4 beschrieben. Die Ansprüche 5-7 beziehen sich auf ein Aufnahme - und/oder Wiedergabegerät mit Magnetband Kassette.

Nachfolgend wird die Erfindung anhand von Ausführungsbeispielen unter Hinweis auf die Zeichnung Fig. 1 bis Fig. 3 näher erläutert. In den Zeichnungen stellen dar:
Fig. 1 Ein Ausführungsbeispiel für den Speicherinhalt der beschriebenen elektronischen Speichereinrichtung bei einer Leerkassette.
Fig. 2 Ein Ausführungsbeispiel für den Speicherinhalt der beschriebenen elektronischen Speichereinrichtung bei einer von einem privaten Nutzer erstmals verwendeten Kassette.
Fig. 3 Ein Ausführungsbeispiel für den Speicherinhalt der beschriebenen elektronischen Speichereinrichtung bei einer zur Vermietung oder zum Verkauf bestimmten Kassette.
Fig. 4 Eine Magnetbandkassette mit einer darin enthaltenen Speichereinrichtung

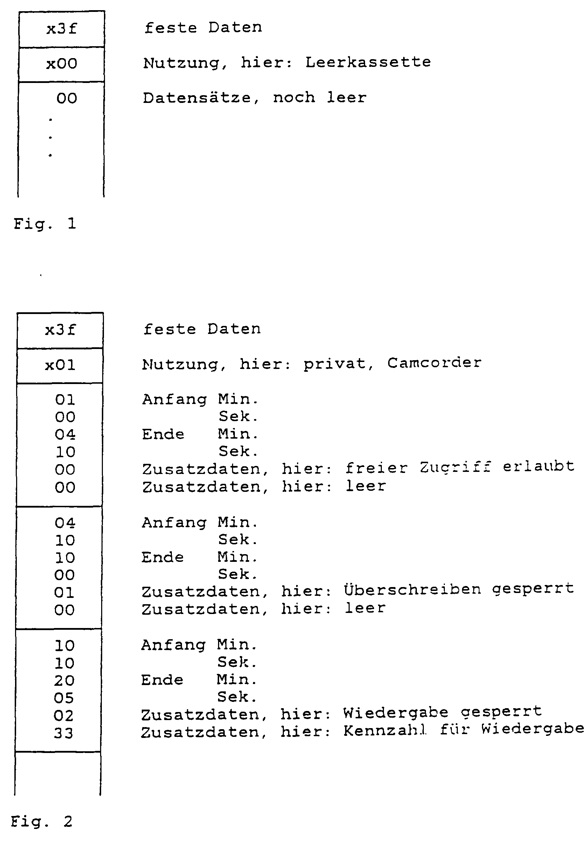

Der in den Fig. 1 bis Fig. 3 dargestellte elektronische Speicher ist in zusammenhängende Einheiten mit unterschiedlicher Länge aufgeteilt, z.B. in Bytes mit je 8 bit Länge oder in Gruppen von Bytes.

Im ersten Byte sind in an sich schon bekannter Weise Informationen über die Kassette selbst, den Kassettentyp, die enthaltene Magnetbandlänge oder den Typ des Magnetbandes, z.B. hier (x für Hexadezimaldarstellung) x3f. Diese Informationen sind unveränderlich.

Im zweiten Byte ist eine Information über die Nutzung der Kassette gespeichert. Diese Information kann einmalig bei der ersten Nutzung der Kassette verändert werden, danach ist auch diese Information unveränderlich.

Bei dem in Fig. 1 dargestellten Speicherinhalt einer Leerkassette ist hier beispielsweise 00 eingetragen, wobei diese Kennung gleichzeitig eine einmalige Anderung des Eintrags erlaubt. Der Rest des Speicherinhalts bei einer Leerkassette ist unbedeutend und daher beliebig, z.B. auch konstant 00.

Der in Fig. 2 dargestellte Speicherinhalt einer von einem privaten Nutzer erstmals in einem Camcorder verwendeten Kassette ist an der zweiten Position z.B. durch den Eintrag 01 gekennzeichnet. Eine erstmals in einem Videorecorder verwendete Kassette könnte dann z.B. durch 02, eine erstmals in einem Tonrecorder verwendete Kassette durch 03 gekennzeichnet werden.

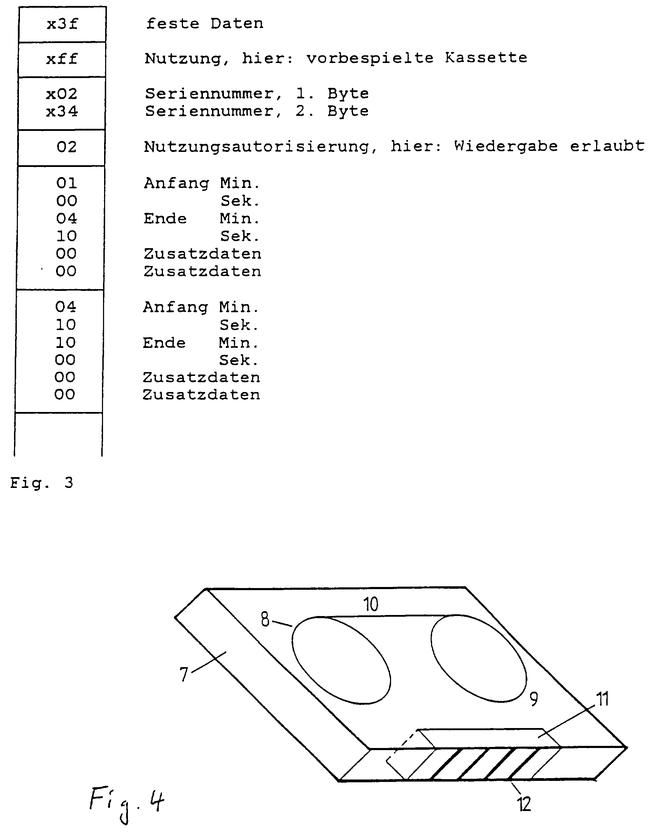

Der folgende Speicherbereich in Fig. 1 und Fig. 2 dient zur Kennzeichnung einer Kombination aus Anfangspunkt, Endpunkt und Dauer einer jeweiligen Aufnahme. Hier ist beispielsweise ein Datensatz bestehend aus Anfangszeit in Minuten und Sekunden, Endzeit in Minuten und Sekunden und mehreren Byte für zusätzliche Information dargestellt. Für jede Aufnahme auf dem Magnetband ist solch ein Datensatz vorgesehen.
Demgegenüber kann z.B. eine vorbespielte, zur Vermietung oder Verkauf bestimmte Kassette an dei zweiten Stelle durch xff gekennzeichnet werden. Der in Fig. 3 dargestellte Speicherinhalt bei einer vorbespielten Kassette weicht insofern ab, als zwischen den ersten beiden Bytes und den folgenden Datensätzen weitere Informationsstellen eingeschoben sind. Diese enthalten z.B. eine Seriennummer, mit der die mit einem bestimmten Programm bespielte Kassette eindeutig identifiziert werden kann, und in einer weiteren Speicherstelle z.B. Information über die Art der Wiedergabeautorisierung.

Im Folgenden werden nun die verschiedenen Funktionsweisen beschrieben, die zu einer Verhinderung von unerwünschten oder unerlaubten Betriebszuständen führen.

### 1. Leerkassette

Der Speicherinhalt bei einer unbenutzten Leerkassette ist in Fig. 1. dargestellt. Die Kennung '00' im zweiten Speicherbereich erlaubt es, diesen einmalig bei der ersten Aufnahme auf die Kassette zu verändern.

### 2. Selbst aufgenommene Kassette

Wenn die Kennung im zweiten Speicherbereich anzeigt, daß es sich um eine Kassette aus privater Nutzung handelt, dann ist damit auch die Aufteilung der folgenden Speicherbereiche festgelegt.

### 2.1 Aufnahmesicherung

Eine Sicherung gegen ungewolltes Überschreiben oder Löschen bereits vorhandener Aufnahmen wird dadurch erreicht, daß ein Aufnahmegerät stets einen Vergleich zwischen der aktuellen Bandposition und den Einträgen im Speicher durchführt. Nur wenn dieser Vergleich kein mögliches überschreiben anzeigt wird dann die Aufnahmefunktion freigegeben. Wird jedoch ein mögliches Überschreiben entdeckt, so kann die Aufnahmefunktion völlig gesperrt oder erst nach Rückfrage und Bestätigung freigegeben werden. Darüberhinaus kann auch ein völliges Sperren der Aufnahmefunktion für jede einzelne Aufnahme durch einen entsprechenden Eintrag in der für Zusatzdaten vorgesehenen Speicherstelle bewirkt werden. Dieser Eintrag kann vom Benutzer mit Hilfe einer entsprechenden Funktion am Recorder oder Camcorder vorgenommen und auch wieder entfernt werden. Diese so beschriebene Funktion ersetzt damit in wesentlich flexiblerer Form die bisher an Magnetbandkassetten übliche mechanische Löschsperre in Form einer herausbrechbaren Zunge oder eines Schiebers.

### 2.2 Kindersicherung

Eine weitere mögliche Funktion ist die gezielte Freigabe oder Sperrung der Wiedergabe für jede einzelne Aufnahme. Dies kann ebenfalls durch einen Eintrag an der für Zusatzdaten vorgesehenen Stelle erfolgen. Auf diese Weise kann die Wiedergabe für Unbefugte z.B. in Form einer Kindersicherung verhindert werden. Um ein einfaches Ändern dieser Einträge zu verhindern, kann ein Paßwort/Kennzahl vereinbart werden. Dieses kann ebenfalls zusammen mit den übrigen Daten in der Speichereinrichtung gespeichert werden.

### 3. Vorbespielte Kassette

Bei einer als vorbespielt gekennzeichneten Kassette kann beispielsweise grundsätzlich nur die Wiedergabe freigegeben sein, womit ein ungewolltes Löschen sicher verhindert wird.

Um das Diebstahlsrisiko für solche Kassetten zu vermindern, kann an der für Nutzungsautorisierung vorgesehenen Stelle ein besonderer Eintrag notwendig sein, damit die Wiedergabefunktion eines Abspielgerätes überhaupt freigegeben wird. Dieser Eintrag kann z.B. bei im Regal einer Videothek ausgelegten Kassetten nicht vorhanden sein und erst an der Kasse vorgenommen werden. Da aber ein solcher Eintrag mit Hilfe geeigneter Geräte manipuliert werden kann, ist es noch zweckmäßiger, bei im Regal ausgelegten Kassettne die gesamten den Inhalt betreffenden Datensätze zu löschen. Eine solche Kassette ist praktisch wertlos. Erst an der Kasse wird dann die Kassette anhand der Seriennummer identifiziert und die Datensätze z.B. aus dem Speicher eines Computers nachgeladen.

Es ist nicht nur möglich, grundsätzlich die Wiedergabe einer Kassette durch einen entsprechenden Eintrag zu autorisieren. Darüberhinaus können auch nur bestimmte Funktionen für die Wiedergabe autorisiert werden. Bei kompatiblen HDTV/TV Aufzeichnungen ist es beispielsweise möglich, nur die TV Wiedergabe mit geringerer Auflösung zu gestatten, bei Aufzeichnungen mit Stereo- und Surround-Sound kann die Wiedergabe des Surround-Sound gesperrt werden. Ferner ist es auch möglich, eine Speicherstelle in der Speichereinrichtung als Zähler für die Anzahl der erlaubten Abspielungen auszubilden.

Zusätzlich zu den für eine vorbespielte Kassette typischen Einträgen können weiterhin vom Benutzer wie bei einer selbstaufgenommenen Kassette individuelle Wiedergabesperren aktiviert werden. Nach einer erfolgten Rückgabe der Kassette könnten solche Sperreinträge, ggf. mit Paßkennzahl, in der Speichereinrichtung verblieben sein. Es ist aber ohne weiteres möglich, diese insgesamt bei einer Gesamtsperrung nach der Rückgabe oder bei einer erneuten Autorisierung an der Kasse aus der Speichereinrichtung zu entfernen.

### 4. Vorbespielte Kassette mit erhöhtem Schutz (Vergleich mit Subcode)

Es ist denkbar, daß mit geeigneten Hilfsmitteln von unbefugter Seite der Inhalt der Speichereinrichtung verändert werden kann, und zwar insbesondere der Inhalt der die Autorisierung kennzeichnenden Speicherstellen. Eine erhöhte Sicherheit kann dadurch hergestellt werden, daß bei einer vorbespielten Kassette der gesamte Inhalt der Speichereinrichtung oder Teile davon zusammen mit der Aufzeichnung des Nutzsignals laufend als sogen. Subcode aufgezeichnet wird. Wenn man die Wiedergabe nur dann freigibt, wenn der Inhalt der Speichereinrichtung mit dem aufgezeichneten Subcode übereinstimmt, dann reicht es aus, zur Sperrung einer Wiedergabe den Inhalt der Speichereinrichtung an einer oder an wenigen Stellen gezielt zu verändern.

Eine solche Kassette ist dann ebenfalls solange wertlos, bis der zur Autorisierung Befugte die gespeicherte Information an den nur ihm bekannten Stellen wieder berichtigt. Vorteilhaft ist, daß es nicht erforderlich ist, den Inhalt der Speichereinrichtung zu verschlüsseln oder der Speichereinrichtung eine Verschlüsselungseinheit zuzuordnen.

Fig 4 zeigt eine Magnetbandkassette 7 mit einem Gehäuse. Die Magnetbandkassette enthält zwei Magnetbandspulen 8 und 9, auf denen ein Magnetband 10 aufgerollt ist. Außerdem enthalt die Magnetbandkassette eine vorstehend beschriebene Speichereinrichtung 11, die an der der Außenwand der Magnetbandkassette zugewandten Seite 12 mit einer in einem Magnetbandgerät vorgesehenen Schreib- und/oder Leseeinrichtung verbunden oder gekoppelt werden kann. Die Schreib- und/oder Leseeinrichtung dient dabei als Schnittstelle bzw. Mittel zur Übertragung von Signalen von der Speichereinrichtung zum Magnetbandgerät oder ungekehrt. In dem Magnetbandgerät (nicht dargestellt) werden die von der Speicheinrichtung empfangenen Signale in einer Datenverarbeitungs und/oder Steuereinheit verarbeitet bzw. ausgewertet. Diese Datenverarbeitungs- und/oder Steuereinheit steuert eine Betriebsartensperre wie vorstehend beschrieben.

Mittels der Erfindung lassen sich aber noch weitere Sperren oder Freigaben des Magnetbandgerätes und der Kasette mit Memory durchführen.

Beispielsweise kann eine allgemeine Aufnahmesperre durch ein spezielles (Sperr-) Bit im Memory ausgelöst, werden, wobei dieses Bit mechanische Schieber/Abbrechlaschen ersetzt. Das Bit kann durch den Benutzre gesetzt oder freigegeben werden. Durch eine im Memory abgelegte Bit-Kennzeichnung der Kassette z.B. Miet-/Kauf-kassette kann grundsätzlich eine unerwünschte Aufnahme gesperrt sein.

Des weiteren sind spezifischen Sperrmodi denkbar, welche eine Aufnahmesperre mit Rückfrage bei Konflikt zwischen Bandstand und bereits vorhandenen Einträgen in der UTOC (User Table Of Content) auslösen. Dieser Sperrmodus kann auch als Safe-Record Funktion bezeichnet werden.

Eine spezifische Aufnahmesperre kann auch durch einen neuen Eintrag im UTOC durch den Benutzer gesetzt oder freigegeben werden.

Eine allgemeine Widergabesperre erfolgt nur, wenn ein Eintrag im UTOC vorhanden ist und wenn nicht zusätzliche Sperren gesetzt sind.

Der Benutzer kann die gesamte Kassette mit/ohne Paßwort allgemein sperren (adult video) oder spezifische Sperren für jeden Eintrag der UTOC mit/ohne Paßwort auslösen.

Eine kassettentypische Sperre bietet sich insbesondere bei Verkauf/Vermietkassetten an. Dort kann eine Wiedergabe im Wiedergabegerät nur dann erfolgen, wenn die Nutzung der Kassette erlaubt ist, d.h. wenn das "Videothek bezahlt" Bit gesetzt ist.

Eine weitere Sperrmöglichkeit bietet der Vergleich des Inhalts des Memory mit dem auf dem Magnetband gespeicherten Subcode.

Beispielsweise erfolgt eine Wiedergabe nur dann, wenn ein bestimmter Teil des Subcode mit einem bestimmten Eintrag im Memory übereinstimmt. Es ist natürlich verteilhaft, wenn jede Kassette numeriert ist, diese Nummer einerseits im Memory steht und andererseits bei jeder Aufnahme im Subcode mit aufgezeichnet wird. Damit gehören dann Kasettengehäuse (= Memory) und das bespielte Band zusammen.

Nachfolgend seien Sperr/Freigabeverfahren mit einer Verschlüsselung beschrieben.

Grundsätzlich sei eine Kassettennumer und deinige weitere Informationen z.B. "Videothek-bezahlt-Bit" vorhanden und dies mit 64 Bit, d.h. 2 * 10 exp 19 Varianten. Des weiteren sei ein Verschlüsselungsverfahren mit Trapdoor- und/oder Avalanche - Funktion gegeben und jeder Recorder enthält einen Chip, der die Verschlüsselung ausführen kann. Trapdoor bedeutet, daß leicht aus dem Klartext x der Schlüsseltext f(x) berechnet werden kann. Dagegen kann mit vertretbarem Aufwand nicht x aus F8x) berechnet werden. Avalanche bedeutet, daß kleine Änderungen im Klartext auf große Änderungenm im Schlüsseltext führen.

Die Wiedergabe wird nur freigegeben, wenn der vom Subcode gelesene Schlüsseltext f'(x) mit dem aktuell aus dem Klartext des Memory verschlüsselten Schlüssellten (f(x) iibereinstimmt. Selbst kleine Veränderungen an den relevanten Stellen im Memory machen damit die Wiedergabe sofort unmöglich.

Bei der Aufnahmesperre bedeutet die Verschlüsselung eine deutliche Verbesserung des bekannten Serial Copy Management. Der Klartext x aus dem Memory und der Schlüsseltext f'(x) aus dem Subcode der Wiedergabekassette werden über das digitale Interface zum aufnehmenden Recorder übertragen, z.B. 2 mal 64 Bit.

Der aufnehmende Recorder schaltet nur auf Aufnahme, wenn der neu aus dem übertragenen x berechnete Schlüsseltext f(x) mit dem ebenfalls übertragenen Schlüsseltext f'(x) übereinstimmt.

Irgend ein einfacher Eingriff in die Übertragung von x und f'(x), z.B. Umkehren eines Bit, kann nicht dazu führen, daß eine eigentlich nicht erlaubte Aufnahme doch möglich wird.Der aufnehmende Recorder zeichnet nun im Subcode einen neuen Schlüsseltext auf, der zu der aktuellen Kassettennummer und zu den aktuellen und ggf. veränderten Sperrbits gehört.

Eine Originalkassette kann so im Memory undverschlüsselt im Subcode die Information "Eine Kopie erlaubt" enthalten. Nach deren Auswertung schreibt der Aufnahme-Recorder dann ins Memory und in den Subcode die Information "ist schon eine Kopie". Ein weiterer Kopiervorgang ist dann unmöglich.

## Patentansprüche

1. Magnetbandkassette (7) mit einem Gehäuse, mindestens einer Magnetbandspule (8, 9) und einer elektronischen Speichereinrichtung (11), wobei die Speichereinrichtung bei Anordnung der Magnetbandkassette in einem Aufnahme- und/oder Wiedergabegerät mit diesem verbindbar und zur Auswertung der gespeicherten Information mittels einer Datenverarbeitungs- und Steuerschaltung ansteuerbar ist und in einem ersten Teilbereich der Speichereinrichtung unveränderliche Daten eingeschrieben sind, die die Kassette und das enthaltene Magnetband (10) selbst oder deren Parameter kennzeichnen, und ein zweiter Teilbereich der Speichereinrichtung von den auf dem Magnetband gespeicherten Informationen abhängige Daten enthält, **gekennzeichnet durch**:
- im Fall einer Leer-Magnetbandkassette (7) sind bei einer ersten Aufnahme auf das Magnetband (10) Daten einmalig in den zweiten Teilbereich der Speichereinrichtung einschreibbar, wodurch die Aufteilung und Verwendung eines weiteren beschreibbaren Teilbereichs der Speichereinrichtung festgelegt wird, wobei der weitere Teilbereich für die Speicherung von Informationen über Anfangs- und Endpunkte von Aufnahmen vorgesehen ist und Steuerdaten enthält, mit denen eine selektive Sperrung von Betriebsarten des Aufnahme- und/oder Wiedergabegeräts steuerbar ist;
- im Fall einer vorbespielten Magnetbandkassette (7) enthält der zweite Teilbereich der Speichereinrichtung Informationen über die Identität und/oder eine Wiedergabe-Authorisierung der Magnetbandkassette, wobei der weitere Teilbereich Informationen über Anfangs- und Endpunkte von Aufnahmen enthält.

2. Magnetbandkassette nach Anspruch 1, **dadurch gekennzeichnet**, daß auch im Fall einer vorbespielten Magnetbandkassette (7) Steuerdaten so geändert werden können, daß eine selektive Sperrung von Betriebsarten des Aufnahme- und/oder Wiedergabegeräts steuerbar ist.

3. Magnetbandkassette nach Anspruch 1 oder 2, **dadurch gekennzeichnet**, daß bei einer vorbespielten Magnetbandkassette der gesamte Inhalt der Speichereinrichtung (11) oder Teile davon zusammen mit der Aufzeichnung eines Nutzsignals laufend als Teil eines Subcodes auf dem Magnetband (10) aufgezeichnet ist und ein Subcode jeweils einem Aufzeichnungsbeitrag zugeordnet ist.

4. Magnetbandkassette nach einem oder mehreren der Ansprüche 1 bis 3, **dadurch gekennzeichnet**, daß die Steuerdaten mittels einer Trapdoor und/oder Avalanche-Funktion verschlüsselt sind.

5. Aufnahme- und/oder Wiedergabe-Gerät, welches eine Aufnehm-Einrichtung für eine Magnetbandkassette und eine Magnetbandkassette (7) mit einer elektronischen Speichereinrichtung (11) nach einem oder mehreren der Ansprüche 1 bis 4 enthält, wobei das Gerät Mittel zur Übertragung von Signalen von und/oder zu der Speichereinrichtung und eine Datenverarbeitungs- und/oder Steuereinrichtung zur Verarbeitung der in der Speichereinrichtung gespeicherten Informationen, sowie Sperrmittel zur Sperrung von Betriebsarten des Aufnahme- und/oder Wiedergabegerätes enthält, wobei die Sperrmittel von der Datenverarbeitungs- und/oder Steuereinrichtung steuerbar sind.

6. Aufnahme- und/oder Wiedergabe-Gerät nach Anspruch 5, **dadurch gekennzeichnet**, daß Mittel zur Verschlüsselung und/oder Entschlüsselung von Steuerdaten vorgesehen sind.

7. Aufnahme - und/oder Wiedergabe-Gerät nach Anspruch 5, **dadurch gekennzeichnet**, daß bei der Wiedergabe einer Magnetbandkassette nach Anspruch 3 der Inhalt der Speichereinrichtung mit dem aufgezeichneten Subcode mittels einer Vergleichsschaltung in dem Aufnahme- und/oder Wiedergabegerät auf Übereinstimmung prüfbar ist, wobei die Wiedergabe-Berechtigung einer Aufnahme durch gezielte Veränderung des auf dem Magnetband aufgezeichneten Subcodes an zumindest einer, örtlich nicht vorherbestimmbaren Stelle gesperrt wird.

## Claims

1. Magnetic tape cassette (7) including a housing, at least one magnetic tape spool (8, 9) and an electronic storage device (11), wherein, when the magnetic tape cassette is arranged in a recording and/or reproduction equipment, the storage device is connectible thereto and can be controlled by means of a data processing and control circuit for evaluating the stored items of information and wherein unalterable items of data, which characterise the cassette and the magnetic tape (10) contained therein themselves or the parameters thereof, are written into a first subsection of the storage device and a second subsection of the storage device contains items of data which are dependent on the items of information stored on the magnetic tape, characterised by:
- in the case of a blank magnetic tape cassette (7) and during a first recording on the magnetic tape (10), items of data can be written once into the second subsection of the storage device whereby the partitioning and utilisation of a further recordable subsection of the storage device is defined and wherein the further subsection is provided for the storage of items of information regarding the starting and end points of the recordings and also contains items of control data with which a selective blocking of the operational modes of the recording and/or reproduction equipment can be controlled;
- in the case of a prerecorded magnetic tape cassette (7), the second subsection of the storage device contains items of information regarding the identity of, and/or an authorisation for reproduction from, the magnetic tape cassette whereby the further subsection contains items of Information regarding the starting and end points of the recordings.

2. Magnetic tape cassette in accordance with Claim 1, characterised in that, the items of control data can be altered in such a way that a selective blocking of the operational modes of the recording and/or reproduction equipment can also be controlled in the case of a prerecorded magnetic tape cassette (7).

3. Magnetic tape cassette in accordance with Claim 1 or 2, characterised in that, for a prerecorded magnetic tape cassette, the entire content of the storage device (11) or parts thereof is continually recorded on the magnetic tape (10) as part of a subcode together with the recording of a useful signal and a respective subcode is assigned to each recorded item.

4. Magnetic tape cassette in accordance with any one or more of Claims 1 to 3, characterised in that, the items of control data are encoded by means of a trapdoor and/or avalanche function.

5. Recording and/or reproduction equipment which includes a recording device for a magnetic tape cassette and a magnetic tape cassette (7) including an electronic storage device (11) in accordance with any one or more of the Claims 1 to 4, wherein the equipment contains means for transmitting signals from and/or to the storage device and a data processing and/or control device for processing the items of information stored in the storage device and also contains blocking means for blocking the operational modes of the recording and/or reproduction equipment, whereby the blocking means can be controlled by the data processing and/or control device.

6. Recording and/or reproduction equipment in accordance with Claim 5, characterised in that, there are provided means for encoding and/or decoding the items of control data.

7. Recording and/or reproduction equivalent in accordance with Claim 5, characterised in that, when effecting reproduction from a magnetic tape cassette in accordance with Claim 3, the content of the storage device can be checked for agreement with the recorded subcode by means of a comparator circuit in the recording and/or reproduction equipments whereby the right to reproduce a recording is blocked by deliberately altering the subcode recorded on the magnetic tape at at least one location whose spatial position cannot be predetermined.

## Revendications

1. Cassette de bande magnétique (7) dotée d'un coffret, d'au moins une bobine de bande magnétique (8, 9) et d'une mémoire électronique (11), sachant que lorsque la cassette se trouve à l'intérieur d'un enregistreur et/ou lecteur, la mémoire peut être reliée à ce dernier et qu'elle peut l'utiliser pour la sélection des informations au moyen d'un circuit de traitement de données et de commande, et que dans une première zone de mémoire, des données invariables sont inscrites, caractérisant la cassette et la bande magnétique (10) qu'elle contient ou bien ses paramètres, et qu'une deuxième zone de mémoire contient des données qui sont fonction des informations mémorisées sur la bande magnétique, cassette caractérisée en ce que :
- dans le cas d'une cassette de bande magnétique vierge (7), des données peuvent être inscrites dans la deuxième zone de mémoire une seule fois lors du premier enregistrement de la bande magnétique (10), cette inscription permettant de définir la répartition et l'utilisation d'une deuxième zone de mémoire inscriptible, sachant que cette deuxième zone de mémoire est prévue pour la mémorisation d'informations concernant le début et la fin des enregistrements ainsi que des données de commande permettant de contrôler l'interdiction sélective des modes de fonctionnement de l'enregistreur et/ou lecteur ;
- dans le cas d'une cassette préenregistrée (7), la deuxième zone de mémoire contient des informations sur l'identité et/ou l'autorisation de lecture de la cassette de bande magnétique, sachant que la deuxième zone de mémoire contient des informations sur le début et la fin des enregistrements.

2. Cassette de bande magnétique selon la revendication 1, caractérisée en ce que dans le cas d'une cassette préenregistrée (7), les données de commande peuvent être modifiées de façon à obtenir une interdiction sélective des modes de fonctionnement de l'enregistreur et/ou lecteur.

3. Cassette de bande magnétique selon la revendication 1, caractérisée en ce que dans le cas d'une cassette préenregistrée, le contenu complet ou partiel de la mémoire (11) est enregistré sur la bande magnétique (10), comme faisant partie d'un sous-code, tout au long de l'enregistrement d'un signal utile, et qu'un sous-code est respectivement attribué à chaque enregistrement individuel.

4. Cassette de bande magnétique selon une ou plusieurs revendications 1 à 3, caractérisée en ce que les données de commande sont codées au moyen d'une fonction *trapdoor* et/ou *avalanche.*

5. Enregistreur et/ou lecteur contenant un système d'enregistrement pour une cassette de bande magnétique et une cassette de bande magnétique (7) dotée d'une mémoire électronique (11) selon une ou plusieurs revendications 1 à 4, sachant que l'enregistreur et/ou lecteur contient des moyens de transmission pour les signaux provenant de la mémoire et/ou allant à la mémoire, une unité de traitement de données et/ou de commande pour le traitement des informations contenues dans la mémoire, ainsi que des moyens d'interdiction de ses modes de fonctionnement, ces derniers pouvant être contrôlés par l'unité de traitement de données et/ou de commande.

6. Enregistreur et/ou lecteur selon la revendication 5, caractérisé en ce que les moyens de codage et/ou de décodage sont prévus par les données de commande.

7. Enregistreur et/ou lecteur selon la revendication 5, caractérisé par la possibilité, dans le cas d'une lecture d'une cassette selon la revendication 3, de contrôler, à l'aide d'un circuit comparateur, si le contenu de la mémoire correspond au sous-code enregistré, sachant que l'autorisation de lecture d'un enregistrement est interdit à au moins un emplacement indéfinissable à l'avance, au moyen d'une modification ciblée du sous-code enregistré sur la bande magnétique.
